Europäisches Patentamt

European Patent Office

Office européen des brevets

(19)

(11) EP 0 559 883 B1

## (12) FASCICULE DE BREVET EUROPEEN

(45) Date de publication et mention
de la délivrance du brevet:
**09.07.1997 Bulletin 1997/28**

(21) Numéro de dépôt: **92921603.4**

(22) Date de dépôt: **25.09.1992**

(51) Int Cl.6: **H04L 27/22**, H04L 27/20

(86) Numéro de dépôt international:
**PCT/FR92/00895**

**WO 93/06677 (01.04.1993 Gazette 1993/09)**

(54) **DISPOSITIF DE TRANSMISSION NUMERIQUE ET RECEPTEUR A CONVERSION DIRECTE**

DIGITALE UEBERTRAGUNGSANORDNUNG UND DIREKTKONVERTIERUNGSEMPFÄNGER

DEVICE FOR DIGITAL TRANSMISSION AND DIRECT CONVERSION RECEIVER

(84) Etats contractants désignés:
**AT BE CH DE ES FR GB IT LI NL SE**

(30) Priorité: **26.09.1991 FR 9111855**

(43) Date de publication de la demande:
**15.09.1993 Bulletin 1993/37**

(73) Titulaires:
• **ALCATEL N.V.**
**NL-1077 XX Amsterdam (NL)**
Etats contractants désignés:
**CH LI AT**
• **ALCATEL TELSPACE**
**92734 Nanterre Cédex (FR)**
Etats contractants désignés:
**BE DE ES FR GB IT NL SE**

(72) Inventeur: **JANER, Patrick**
**F-92300 Levallois-Perret (FR)**

(74) Mandataire:
**Pothet, Jean Rémy Emile Ludovic et al**
**ALCATEL ALSTHOM,**
**Département de Propriété Industrielle,**
**30, avenue Kléber**
**75116 Paris (FR)**

(56) Documents cités:
**EP-A- 0 094 040**       **EP-A- 0 123 587**

• **MICROWAVE JOURNAL. vol. 33, no. 4, April
1990, DEDHAM US pages 255 - 264 SURINDER
KUMAR 'Directly modulated VSAT transmitters'**

**Description**

La présente invention se rapporte à un dispositif de transmission numérique d'informations, et plus particulièrement à un dispositif de télécommunications par onde ou par faisceau hertzien numérique, ce dispositif comportant un récepteur à démodulation cohérente réalisée directement en hyperfréquence.

Le faisceau hertzien est un canal de transmission pour l'information contenue dans le débit numérique. Il comprend au moins un émetteur et au moins un récepteur. La modulation généralement utilisée est une modulation à plusieurs états de phase et d'amplitude, qui définit dans le plan complexe une "constellation" à nombre pair d'états.

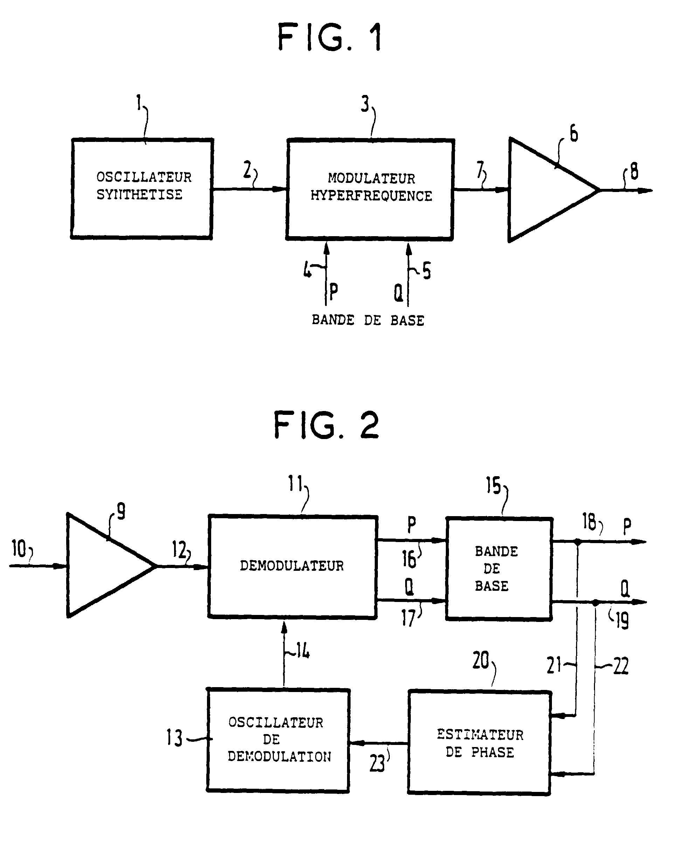

Un dispositif de transmission numérique classique de ce type est représenté sous forme synoptique sur les figures 1 et 2 jointes.

Il s'agit là d'un dispositif à démodulation cohérente, c'est à dire synchrone de l'émission, cette démodulation étant réalisée directement en hyperfréquence, et donc sans transposition en fréquence intermédiaire. La figure 1 est un schéma partiel de la partie émission, et la figure 2 un schéma partiel de la partie réception.

Cette partie émission, telle qu'elle est donc représentée en figure 1, comprend succesivement, de l'amont vers l'aval:

- Un oscillateur hyperfréquence 1, qui peut être synthétisé ou non, et qui fournit la fréquence porteuse d'émission sur sa borne de sortie 2.
- Un modulateur hyperfréquence 3 qui d'une part reçoit cette fréquence porteuse en 2, et d'autre part reçoit classiquement, sur ses deux entrées de modulation 4 et 5, les trains de données à émettre P et Q fournis en bande de base.
- Une partie 6 d'amplification du signal modulé obtenu sur la sortie 7 du modulateur 3, le signal en sortie 8 de cet amplificateur 6 étant appliqué à l'antenne via un filtre émission (non représenté) pour être émis vers le récepteur.

La partie réception qui est représentée en figure 2 comprend à son tour:

- Un amplificateur 9 à faible bruit, ou "A.F.B.", qui reçoit sur son entrée 10 le signal à radio-fréquence provenant de l'antenne de réception via un filtre réception non représenté.
- Un démodulateur hyperfréquence 11 qui reçoit sur son entrée 12 le signal reçu et amplifié par l'amplificateur 9.
- Un oscillateur de démodulation hyperfréquence commandé 13, du type "V.C.O.", dont la sortie 14 est appliquée au démodulateur 11. Il s'agit d'un oscillateur qui, devant avoir une bonne pureté spectrale et une faible dérive en fréquence, est en général réalisé à l'aide de résonateurs diélectriques à fort coefficient de surtension.

. Une partie 15 qui réalise le traitement du signal en bande de base. Cette partie 15 comporte classiquement par exemple: un amplificateur à faible bruit, un filtre passe-bas, un correcteur de Temps de Propagation de Groupe, et un amplificateur à Commande Automatique de Gain, ou "C.A.G.". Elle traite les deux trains de données P et Q, reçues et démodulées, qui lui sont respectivement appliqués sur ses bornes d'entrée 16 et 17 en provenance du démodulateur 14, et fournit, après traitement, ces deux trains P et Q traités en bande de base, sur les deux sorties 18 et 19 de cette partie réception.

- Un estimateur de phase 20, réalisé en bande de base, qui reçoit sur ses entrées 21,22 ces deux trains de données P et Q en sortie du dispositif de traitement 15, et qui fournit sur sa sortie 23 un signal d'erreur de phase sous forme d'une tension continue qui est appliquée sur l'entrée de commande de l'oscillateur 13, afin de former ainsi une boucle d'asservissement en phase qui tend à annuler la différence de phase entre le signal reçu et la porteuse reconstituée. En d'autres termes, cet estimateur de phase 20 génère une tension qui est fonction de l'erreur de phase entre la porteuse récupérée et la porteuse reçue. Cette tension issue en 23 de cet estimateur de phase permet d'asservir en fréquence et en phase l'oscillateur de réception 13, et permet ainsi la démodulation "cohérente" du signal reçu.

Une installation classique telle que celle qui vient d'être décrite présente les inconvénients suivants:

. Le récepteur possède une faible bande passante: L'oscillateur de démodulation 13 devant avoir une bonne pureté spectrale et une faible dérive de fréquence ne peut pas posséder une grande agilité en fréquence, de sorte qu'en pratique ce genre de récepteur est en général apte à ne recevoir qu'un seul canal, ce qui limite considérablement son utilisation.

. Le système est sensible aux "faux accrochages": En démodulation cohérente, il existe des faux accrochages qui sont situés, en fréquence, de part et d'autre de la fréquence porteuse à des multiples du quart du débit numérique dans le cas de la modulation, ici considérée, sur deux axes en quadrature. Le système de récupération de porteuse doit donc obligatoirement comporter un dispositif de détection et de correction de ces faux accrochages. Il en résulte en particulier un quasi-impossibilité d'utiliser la démodulation directe soit dans le cas de très faibles débits numériques, soit lorsqu'il s'agit de récepteurs devant être agiles en fréquence.

L'utilisation d'un synthétiseur de fréquences comme oscillateur de démodulation pourrait théoriquement permettre de s'affranchir de ces problèmes. Cependant, dans le cas ici présent de la démodulation directe, l'oscillateur d'un tel synthétiseur devrait à la fois être asservi par la référence de ce synthétiseur (généralement une référence à quartz) et asservi par la tension issue de l'estimateur de phase, ce qui est bien entendu incompatible. Il en résulte que, jusquà présent, les synthétiseurs de fréquences n'ont malheureusement pas pu être utilisés en démodulation directe en hyperfréquence.

La demande de brevet EP-0.123.587 décrit un système de transmission dans lequel la fréquence de modulation est dans un rapport n prédéterminé par rapport à la fréquence d'horloge. Les fréquences porteuse et de rythme sont donc synchrones.

Cependant, le rapport n ne peut être qu'un entier ou alors un nombre fractionnaire de dénominateur 2. Il n'est donc pas possible de choisir n'importe quelle fréquence rythme en fonction de la fréquence porteuse utilisée.

La demande de brevet EP-0.094.040 décrit un dispositif de transmission synchrone où les données à transmettre sont transmises au moyen de sauts de phase affectant une porteuse émission entre des instants caractéristiques séparés par des intervalles de temps constants. Ce dispositif ne permet pas au récepteur de déduire de la récupération de rythme la fréquence de démodulation à utiliser.

L'invention vise à remédier à ces inconvénients. Elle se rapporte à cet effet à un dispositif conforme à la revendication 1.

L'invention sera bien comprise, et ses avantages et autres caractéristiques ressortiront, lors de la description suivante d'un exemple non limitatif de réalisation d'une telle installation de transmission numérique de données, en référence au dessin schématique annexé dans lequel:

- Figures 3 et 4 sont respectivement des schémas synoptiques des parties émission et réception d'un exemple d'un dispositif de télécommunication numérique par faisceau hertzien;
- Figure 5 est un schéma synoptique de l'oscillateur synthétisé qui équipe cette partie émission d'une part et cette partie réception d'autre part; et
- Figure 6 est un schéma synoptique, semblable à Figure 4, d'une variante légèrement améliorée de cette même partie réception.

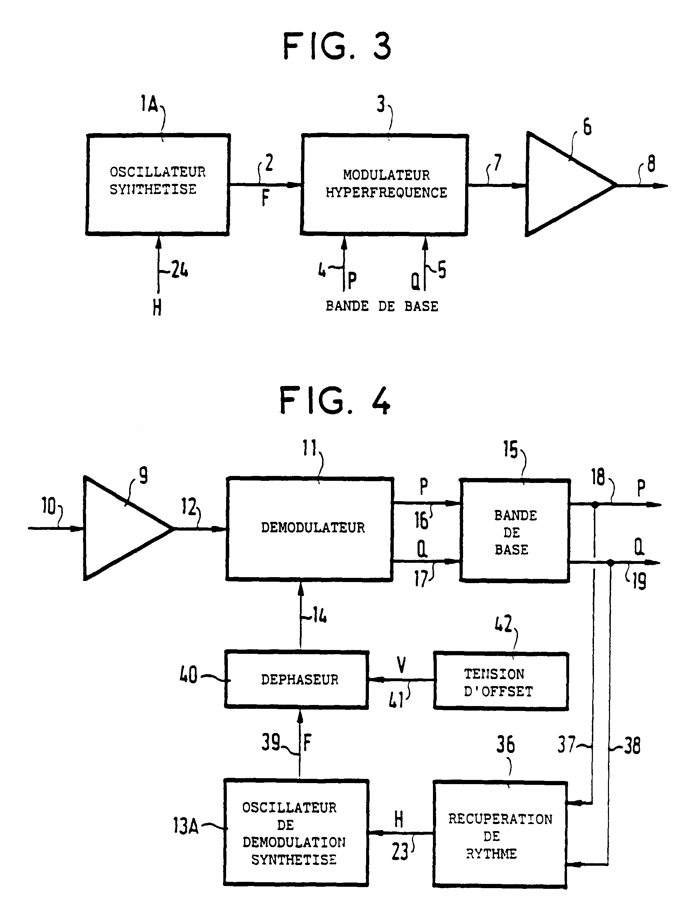

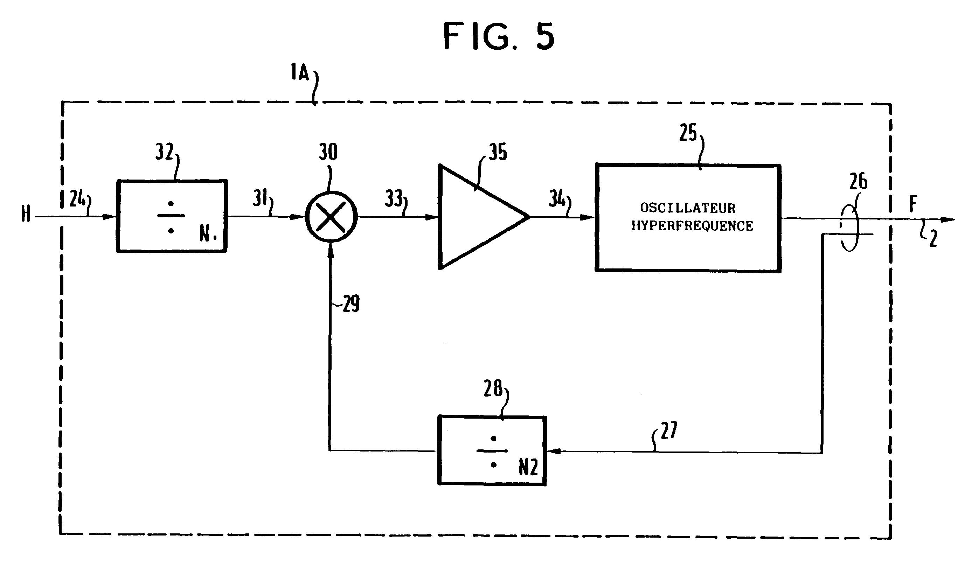

En se reportant à la figure 3, qu'il convient de comparer soigneusement à la figure 1 précédemment décrite, la partie émission de ce faisceau hertzien comporte les mêmes modulateur 3 et amplificateur 6 que la partie émission selon Figure 1, mais son oscillateur synthétisé 1A, ou synthétiseur de fréquences, reçoit comme référence sur son entrée 24 la fréquence d'horloge H du débit binaire à émettre, et plus précisément, comme on le verra maintenant en référence à la figure 5, un sous-multiple de cette fréquence d'horloge H.

Un exemple de réalisation, bien entendu nullement limitatif compte-tenu du grand nombre de types de synthétiseurs de fréquence actuellement connus, d'un tel oscillateur synthétisé IA est donné à titre purement indicatif sur la figure 5.

Ce synthétiseur de fréquences comporte un oscillateur hyperfréquence commandé en tension, ou "V.C.O.", 25 qui fournit sur sa sortie 2 le signal hyperfréquence constituant la porteuse F à radio-fréquence.

Une partie de ce signal de sortie est prélevée par un coupleur 26 et parcourt une boucle 27 qui classiquement comporte un diviseur réglable 28, de rang de division N2.

Le signal de boucle est appliqué sur une des deux entrées 29 d'un comparateur de phases 30 qui reçoit sur son autre entrée 31 la fréquence d'horloge H, c'est-à-dire celle qui donne le rythme des données binaires, appliquée en 24 et divisée au moyen d'un diviseur réglable 32 de rang de division N1.

Le signal d'erreur en sortie 33 du comparateur de phases 30 est appliqué sur l'entrée de commande 34 de l'oscillateur 25, après passage par un amplificateur/filtre de boucle 35.

La fréquence porteuse F est donc imposée par la fréquence d'horloge H du débit numérique, et a précisément comme valeur:

$$F = H \times N2/N1.$$

En se reportant maintenant à la figure 4, qu'il convient de même de rapprocher de la figure 2 précédemment décrite, ce récepteur possède les mêmes amplificateur 9, démodulateur 11, et dispositif 15 de traitement en bande de base, que le récepteur selon cette figure 2.

En revanche, et conformément à l'invention, son oscillateur de démodulation 13A est constitué par un synthétiseur de fréquences identique à celui, 1A, utilisé à l'émission, c'est-à-dire comportant les mêmes rangs de division N1 et N2 précités.

La référence de cet oscillateur 13A, qu'il reçoit sur son entrée 23, est constituée par la fréquence d'horloge H du débit numérique, identique à la fréquence d'horloge d'émission et qui est récupérée à l'aide d'un classique dispositif 36 de récupération de rythme qui reçoit sur ses deux entrées 37 et 38 les données P et Q démodulées et traitées en bande de base, ces deux trains de données étant présents sur les sorties 18 et 19 de ce synoptique de réception.

La fréquence qui est obtenue en sortie 39 de cet oscillateur 13A est donc nécessairement identique à la radio-fréquence F d'émission, et elle est synchrone de cette dernière. puisqu'imposée par le rythme récupéré H. Les faux-accrochages précités, qui grèvent les dispositifs de l'art antérieur, sont donc ici totalement impossibles.

A noter que souvent le circuit de récupération de rythme 36, qui est un circuit en soi bien connu, comporte des portes logiques, ou autres éléments fonctionnels, qui ont pour inconvénient d'introduire un décalage de phase pratiquement fixe.

C'est pourquoi, le signal hyperfréquence en sortie 39 de l'oscillateur 13A n'est pas directement appliqué sur l'entrée 14 du démodulateur 11, mais il est préalablement traité par un déphaseur ajustable 40, dont le déphasage fixe qu'il engendre est réglé par une tension V de commande de valeur du décalage de phase, cette tension V étant appliquée sur l'entrée de commande 41 du déphaseur 40.

Ce déphasage fixe est ajusté pour compenser le décalage de phase précité dans la boucle comportant le récupérateur de rythme 36.

En réglant à loisir les rangs de division N1 et N2 communs aux deux synthétiseurs 1A et 13A, on déplace la fréquence porteuse F, ce qui permet à cette installation de couvrir un grand nombre de canaux.

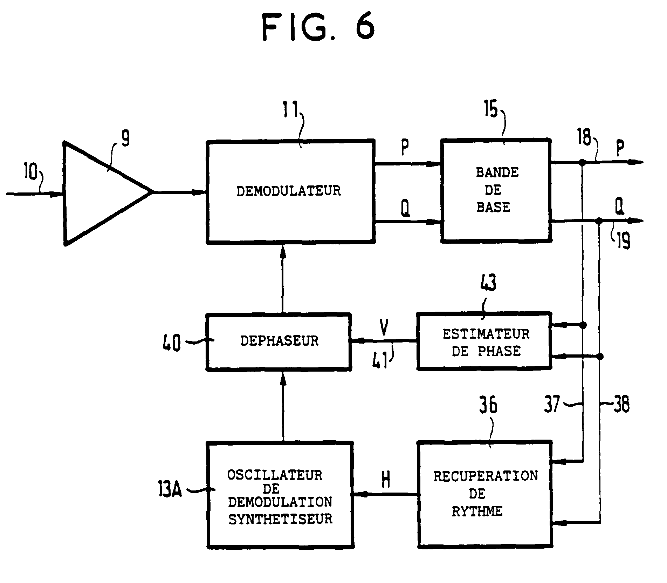

Une variante un peu plus perfectionnée du récepteur est représentée en Figure 6.

Dans ce cas, en particulier dans un but d'asservissement automatique permettant d'éviter un réglage manuel de la tension V précitée, et également pour compenser d'éventuelles dérives de phase dans la boucle en raison par exemple de variations thermiques, la tension de décalage V est fournie automatiquement par un estimateur de phase 43, par exemple semblable à celui, 20, de la figure 1. Cet estimateur de phase 43 est alors commandé par les données démodulées P et Q qui sont présentes sur les sorties 18 et 19.

Comme il va de soi, l'invention n'est pas limitée à l'exemple de réalisation qui vient d'être décrit. C'est ainsi que d'autres types de synthétiseurs peuvent être utilisés et que les synthétiseurs d'émission 1A et de réception 13A peuvent être structurellement différents, pourvu qu'ils soient fonctionnellement identiques, c'est-à-dire ayant comme référence un multiple ou un sous-multiple du rythme du débit binaire.

**Revendications**

1. Dispositif de transmission numérique d'informations, en particulier par onde hertzienne hyperfréquence, ce dispositif comportant d'une part au moins un émetteur des données numériques (P,Q) par porteuse hyperfréquence (F), et d'autre part au moins un récepteur à démodulation cohérente réalisée directement en hyperfréquence,
la fréquence porteur (F) étant synchrone de la fréquence d'horloge (H) du débit numérique à transmettre,
**caractérisé** en ce que d'une part cet émetteur utilise, pour générer la fréquence porteuse hyperfréquence (F), un premier synthétiseur de fréquences (1A) dont la référence (24,32,31) est fournie par la fréquence d'horloge (H) du débit numérique à transmettre, et en ce que d'autre part ce récepteur utilise, comme oscillateur de démodulation, un autre synthétiseur de fréquences (13A) au moins fonctionnellement identique au premier (1A), et dont la référence est fournie de façon similaire (31,32) par la fréquence d'horloge récupérée (H,23) du débit numérique reçu, la fréquence (F,39) de cet oscillateur de démodulation (13A) étant de ce fait identique à ladite fréquence porteuse d'émission (F,2) et synchrone de cette dernière, un dispositif auxiliaire (40) de décalage de phase étant prévu entre la sortie de cet oscillateur de démodulation (13A) et l'entrée correspondante (14) de commande du démodulateur (11) afin de compenser les décalages de phase éventuellement introduits dans ce récepteur, en particulier par son circuit de boucle (36).

2. Dispositif de transmission numérique selon la revendication 1, caractérisé en ce que le signal d'horloge récupéré (H,23) est fourni à cet oscillateur de démodulation synthétisé (13A) par un circuit de récupération de rythme (36) qui reçoit (37,38) les données (P,Q,) démodulées et traitées (15) en bande de base.

3. Dispositif de transmission numérique selon la revendication 1 ou la revendication 2, caractérisé en ce que le dispositif (40) de décalage de phase est commandé (41) par un estimateur de phase (43) qui reçoit les données (P,Q) démodulées et traitées (15) en bande de base.

4. Dispositif de transmission numérique selon l'une des revendications 1 à 3, caractérisé en ce que la fréquence d'horloge (H) est appliquée à chacun des deux synthétiseurs (1A,13A) à travers un diviseur de rang variable (N1), de sorte que la fréquence de sortie (F) de ce synthétiseur (1A,13A) est égale à:

$$F = H \times N2/N1 \,,$$

où N2 est le rang de division du diviseur réglable (28) qui équipe classiquement la boucle (27) de ce synthétiseur.

5. Récepteur à démodulation cohérente réalisée directement en hyperfréquence,
caractérisé en ce qu'il comporte un oscillateur de démodulation réalisé sous la forme d'un synthétiseur de fréquences, appelé deuxième synthétiseur de fréquences (13A), fonctionnellement identique à un premier synthétiseur de fréquences (1A) utilisé au niveau d'un émetteur d'un signal destiné à ce récepteur pour la génération de la fréquence porteuse (F, 2) dudit signal, ledit premier synthétiseur de fréquences (1A) recevant comme signal de référence la fréquence d'horloge (H, 24) du débit numérique à transmettre, ledit deuxième synthétiseur de fréquences (13A) recevant comme signal de référence la fréquence d'horloge récupérée (H, 23) du débit numérique reçu, la fréquence de cet oscillateur de démodulation (13A) étant de ce fait identique à la fréquence porteuse d'émission (F, 2) et synchrone de cette dernière, ledit récepteur comprenant également un dispositif auxiliaire (40) de décalage de phase placé entre la sortie dudit oscillateur de démodulation (13A) et l'entrée (14) de commande dudit démodulateur (11) afin de corriger les décalages de phase éventuels introduits dans ledit récepteur.

## Claims

1. A digital data transmission system, in particular by means of microwave radio beam, said system comprising firstly at least one transmitter of digital data (P, Q) on a microwave carrier (F) and secondly at least one receiver that performs coherent demodulation directly at microwave frequency, the carrier frequency (F) being synchronous with the clock frequency (H) of the digital stream to be transmitted, characterized in that firstly the transmitter uses a first frequency synthesizer (1A) to generate the microwave carrier frequency (F), the reference (24, 32, 31) for the synthesizer being provided by the clock frequency (H) of the digital stream to be transmitted, and in that secondly the receiver uses another frequency synthesizer (13A) as its demodulation oscillator, said other frequency synthesizer being at least functionally identical to the first frequency synthesizer (1A) and having its reference provided in similar manner (31, 32) by the clock frequency (H, 23) recovered from the received digital stream, the frequency (F, 39) of said demodulation oscillator (13A) thus being identical to said transmission carrier frequency (F, 2) and being synchronous therewith, an auxiliary phase offset circuit (40) being provided between the output from said demodulation oscillator (13A) and the corresponding control input (14) of the demodulator (11) in order to compensate for any phase offsets that may be generated by the receiver, in particular by its loop circuit (36).

2. A digital transmission system according to claim 1, characterized in that the recovered clock signal (H, 23) is delivered to said synthesized demodulation oscillator (13A) by a clock recovery circuit (36) which receives (37, 38) the data (P, Q) as demodulated and processed (15) in baseband.

3. A digital transmission system according to claim 1 or claim 2, characterized in that the phase offset circuit (40) is controlled (41) by a phase estimator (43) which receives the data (P, Q) as demodulated and processed (15) in baseband.

4. A digital transmission system according to any one of claims 1 to 3, characterized in that the clock frequency H is applied to each of the two synthesizers (1A, 13A) via a divider by a variable number N1, such that the output frequency F of the synthesizer (1A, 13A) is equal to:

$$F = H \times N2/N1$$

where N2 is the number by which the adjustable divider (28) conventionally fitted to the loop (27) of said synthesizer divides.

5. A receiver that performs coherent demodulation directly at microwave frequency, characterized in that it includes a demodulation oscillator implemented in the form of a frequency synthesizer, referred to as a "second" frequency synthesizer (13A), and functionally identical to a "first" frequency synthesizer (1A) used to generate the carrier frequency (F, 2) of said signal in a signal transmitter for transmitting to said receiver, said first frequency synthesizer (1A) receiving as its reference signal the clock frequency (H, 23) recovered from the received digital stream, the frequency of said demodulation oscillator (13A) thus being identical to the transmission carrier frequency (F, 2) and being synchronous therewith, said receiver also comprising an auxiliary phase offset circuit (40) placed between the output from said demodulation oscillator (13A) and the control input (14) of said demodulator (11) in order to correct any phase offsets that may be generated by said receiver.

## Patentansprüche

1. Vorrichtung zur Übertragung von digitalen Informationen, insbesondere über Funk, die einerseits mindestens einen Sender zur Aussendung von digitalen Daten (P, Q) auf einer Hochfrequenz-Trägerwelle (F) und andererseits mindestens einen Empfänger mit einer direkten kohärenten Demodulation aus der Hochfrequenz enthält, wobei die Trägerfrequenz (F) zur Bitfrequenz (H) der zu übertragenden Informationen synchron ist, dadurch gekennzeichnet, daß einerseits der Sender zur Erzeugung der Trägerfrequenzwelle (F) einen ersten Frequenzsynthetisierer (1A) besitzt, dessen Bezugsfrequenz (24, 32, 31) durch die Bitfrequenz (H) der zu übertragenden Informationen definiert wird, daß andererseits der Empfänger als Demodulationsoszillator einen weiteren Frequenzsynthetisierer (13A) enthält, der zumindest funktional dem ersten Synthetisierer (1A) gleicht und dessen Bezugsfrequenz in ähnlicher Weise (31, 32) durch die wiedergewonnene Bitfrequenz (H, 23) der empfangenen Informationen definiert wird, wobei die Frequenz (F, 39) dieses Demodulationsoszillators (13A) der Trägerfrequenz (F, 2) auf der Sendeseite gleich und mit dieser synchron ist, und daß eine Hilfsvorrichtung (40) zur Phasenverschiebung zwischen dem Ausgang dieses Demodulationsoszillators (13A) und dem entsprechenden Steuereingang (14) des Demodulators (11) vorgesehen ist, um die Phasenverschiebungen zu kompensieren, die ggf. in dem Empfänger erfolgt sind, insbesondere in dessen Schleifenschaltung (36).

2. Vorrichtung zur digitalen Übertragung nach Anspruch 1, dadurch gekennzeichnet, daß das wiedergewonnene Taktsignal (H, 23) dem synthetisierten Demodulationsoszillator (13A) über eine Taktwiedergewinnungsschaltung (36) zugeführt wird, die die demodulierten und verarbeiteten (15) Daten (P, Q) im Basisband empfängt (37, 38).

3. Vorrichtung zur digitalen Übertragung nach Anspruch 1 oder 2, dadurch gekennzeichnet, daß die Hilfsvorrichtung (40) zur Phasenverschiebung von einem Phasenschätzorgan (43) gesteuert wird (41), das die demodulierten und verarbeiteten (15) Daten (P, Q) im Basisband empfängt.

4. Vorrichtung zur digitalen Übertragung nach einem der Ansprüche 1 bis 3, dadurch gekennzeichnet, daß die Bitfrequenz (H) an die beiden Synthetisierer (1A, 13A) über einen Teiler variablen Teilerrangs (N1) angelegt wird, so daß die Ausgangsfrequenz (F) dieses Synthetisierers (1A, 13A) den folgenden Wert hat:

$$F = H \cdot N2/N1$$

wobei N2 der Teilerrang des regelbaren Teilers (28) ist, der üblicherweise in der Schleife (27) des Synthetisierers vorgesehen ist.

5. Empfänger mit einer direkten kohärenten Demodulation der Hochfrequenzwelle, dadurch gekennzeichnet, daß er einen Demodulationsoszillator enthält, der als Frequenzsynthetisierer ausgebildet ist, zweiter Frequenzsynthetisierer (13A) genannt, und dem ersten Frequenzsynthetisierer (1A) gleicht, der in dem Sender für ein an diesen Empfänger gerichtetes Signal verwendet wird, um die Trägerfrequenz (F, 2) dieses Signals zu erzeugen, wobei der erste Frequenzsynthetisierer (1A) als Bezugssignal die Taktfrequenz (H, 24) des zu übertragenden Binärtakts empfängt, während der zweite Frequenzsynthetisierer (13A) als Bezugssignal die wiedergewonnene Bitfrequenz (H, 23) der empfangenen Informationen empfängt, so daß die Frequenz dieses Demodulationsoszillators (13A) der Trägerfrequenz (F, 2) auf der Sendeseite entspricht und mit dieser synchron ist, und daß der Empfänger außerdem eine Hilfsvorrichtung (40) zur Phasenverschiebung enthält, die zwischen dem Ausgang des Demodulationsoszillators (13A) und dem Steuereingang (14) des Demodulators (11) liegt, um die eventuellen im Empfänger auftretenden Phasenverschiebungen zu korrigieren.

# FIG. 1

```
┌─────────────┐        ┌─────────────┐        ╲
│      1      │        │      3      │       6 ╲
│ OSCILLATEUR │   2    │ MODULATEUR  │   7    │  ╲    8
│ SYNTHETISE  │ ────▶  │HYPERFREQUENCE│ ────▶ │   ▶ ──▶
│             │        │             │       │  ╱
└─────────────┘        └─────────────┘        ╱
                          ▲        ▲
                          │4       │5
                          P        Q

                      BANDE DE BASE
```

# FIG. 2

```
        ╲              ┌─────────────┐   P    ┌─────────┐  18   P
       9 ╲             │     11      │ ─────▶ │   15    │ ────▶ ──▶
   10  │   ╲    12     │ DEMODULATEUR│   16   │  BANDE  │
  ──▶  │    ▶ ────────▶│             │        │   DE    │
       │   ╱           │             │   Q    │  BASE   │  Q
        ╲ ╱            └─────────────┘ ─────▶ └─────────┘ ────▶ ──▶
                              ▲          17                 19
                              │14
                       ┌──────────────┐        ┌──────────────┐  21       22
                       │ OSCILLATEUR  │        │      20      │
                  13   │     DE       │ ◀───── │  ESTIMATEUR  │
                       │ DEMODULATION │   23   │   DE PHASE   │
                       │              │        │              │
                       └──────────────┘        └──────────────┘
```

# FIG. 3

```
  1A                          3                          6
 ┌──────────────┐  2       ┌──────────────┐  7    ╱│          8
 │ OSCILLATEUR  │──────────│  MODULATEUR  │──────╱ │─────────
 │ SYNTHETISE   │    F      │ HYPERFREQUENCE│     ╲ │
 └──────────────┘          └──────────────┘       ╲│
        ▲                    ▲          ▲
        │ 24               4 │ P      Q │ 5
        │
        H                   BANDE DE BASE
```

# FIG. 4

```
      9                      11                    15
 ╱│        12        ┌──────────────┐  P   ┌──────────┐  18    P
╱ │──────────────────│              │──────│  BANDE   │─────────
╲ │  10              │ DEMODULATEUR │  16  │   DE     │
 ╲│                  │              │  Q   │  BASE    │  Q
 10                  │              │──────│          │─────────
                     └──────────────┘  17  └──────────┘  19
                            ▲
                            │ 14
                                              42
                     ┌──────────────┐       ┌──────────────┐
          40         │  DEPHASEUR   │   V   │   TENSION    │
                     │              │───────│   D'OFFSET   │
                     └──────────────┘  41   └──────────────┘
                            ▲
                         39 │ F
                                              36        37    38
                     ┌──────────────┐       ┌──────────────┐
                     │ OSCILLATEUR  │   H   │ RECUPERATION │
          13A        │     DE       │───────│     DE       │
                     │ DEMODULATION │  23   │   RYTHME     │
                     │ SYNTHETISE   │       │              │
                     └──────────────┘       └──────────────┘
```

# FIG. 5

EP 0 559 883 B1

EP 0 559 883 B1

# FIG. 6